(19) Europäisches Patentamt
European Patent Office
Office européen des brevets

(11) **EP 1 584 837 B1**

(12) **FASCICULE DE BREVET EUROPEEN**

(45) Date de publication et mention
de la délivrance du brevet:
**08.08.2007 Bulletin 2007/32**

(51) Int Cl.:
***F16F 13/18*** *(2006.01)*

(21) Numéro de dépôt: **05290785.4**

(22) Date de dépôt: **08.04.2005**

(54) **Dispositif antivibratoire**

Schwingungsdämpfungseinrichtung

Antivibration device

(84) Etats contractants désignés:
**DE ES IT**

(30) Priorité: **08.04.2004 FR 0403706**

(43) Date de publication de la demande:
**12.10.2005 Bulletin 2005/41**

(73) Titulaires:
• **HUTCHINSON**
**75008 Paris (FR)**
• **Peugeot Citroën Automobiles S.A.**
**78140 Vélizy Villacoublay (FR)**

(72) Inventeurs:
• **Loubat, Patrice**
**45700 Villemandeur (FR)**
• **Joly, Jérome**
**28200 Chateaudun (FR)**
• **Ramus Serment, Caroline**
**78220 Viroflay (FR)**

(74) Mandataire: **Burbaud, Eric**
**Cabinet Plasseraud**
**52 rue de la Victoire**
**75440 Paris Cedex 09 (FR)**

(56) Documents cités:
**EP-A- 0 098 128**       **EP-A- 0 098 330**
**EP-A- 0 569 676**       **DE-A- 3 729 563**
**DE-A- 10 104 458**      **FR-A- 2 653 844**
**US-A- 4 679 778**       **US-A- 5 215 294**

• **PATENT ABSTRACTS OF JAPAN vol. 0071, no. 65 (M-230), 20 juillet 1983 (1983-07-20) & JP 58 072741 A (TOYOTA JIDOSHA KOGYO KK), 30 avril 1983 (1983-04-30)**
• **PATENT ABSTRACTS OF JAPAN vol. 2003, no. 12, 5 décembre 2003 (2003-12-05) & JP 2004 003615 A (BRIDGESTONE CORP), 8 janvier 2004 (2004-01-08)**
• **PATENT ABSTRACTS OF JAPAN vol. 0123, no. 71 (M-748), 5 octobre 1988 (1988-10-05) & JP 63 120934 A (MAZDA MOTOR CORP), 25 mai 1988 (1988-05-25)**
• **PATENT ABSTRACTS OF JAPAN vol. 0120, no. 64 (M-672), 26 février 1988 (1988-02-26) -& JP 62 209242 A (HONDA MOTOR CO LTD), 14 septembre 1987 (1987-09-14)**
• **PATENT ABSTRACTS OF JAPAN vol. 2000, no. 04, 31 août 2000 (2000-08-31) & JP 2000 025658 A (FUKOKU CO LTD; KOMATSU LTD), 25 janvier 2000 (2000-01-25)**
• **PATENT ABSTRACTS OF JAPAN vol. 0132, no. 65 (M-839), 19 juin 1989 (1989-06-19) & JP 01 065345 A (TOKAI RUBBER IND LTD), 10 mars 1989 (1989-03-10)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention concerne un dispositif anti-vibratoire.

Plus particulièrement l'invention concerne un dispositif antivibratoire comportant :

- une armature supérieure adaptée pour être solidarisée à un premier élément de structure, et une armature inférieure adaptée pour être solidarisée à un second élément de structure, les deux armatures étant sollicitées selon un axe principal,
- au moins deux chambres hydrauliques remplies d'un fluide, séparées par une cloison, dont l'une est délimitée au moins en partie par une paroi souple déformable et par la cloison, l'autre chambre hydraulique A étant délimitée au moins en partie par un corps en élastomère et par la cloison,
- un passage constamment ouvert disposé dans la cloison, mettant en communication les chambres hydrauliques et à travers lequel peut s'écouler le fluide.

Le document FR-A-2 697 604 concerne un dispositif antivibratoire du type décrit précédemment, dont le passage étranglé reliant les chambres hydrauliques entre elles est ménagé dans le pourtour d'une cloison rigide.

Alternativement, selon l'invention, on propose un dispositif antivibratoire du genre en question caractérisé en ce que le fluide a une viscosité comprise entre 20 et 100000 centiStokes à la température ambiante et en ce que le passage présente en section au moins une dimension, dite dimension caractéristique, inférieure ou sensiblement égale à l'épaisseur de la couche limite du fluide.

Dans ce texte, on nomme "passage" des moyens de communication permettant au fluide visqueux de passer d'une chambre hydraulique à l'autre. Il peut exister plusieurs passages. Ce passage peut être un conduit dont les formes en section peuvent être variées. En particulier, la section transversale du conduit présente une forme adaptée pour induire un cisaillement et/ou un laminage du fluide visqueux. Plus précisément, afin d'optimiser cet effet de cisaillement et/ou de laminage, les passages présentent en section au moins une dimension inférieure ou sensiblement égale à l'épaisseur de la couche limite du fluide.

On appelle "couche limite" la couche dont l'épaisseur est égale à la distance transversale où la composante longitudinale de la vitesse atteint 99% de la vitesse obtenue en fluide parfait. L'épaisseur de la couche limite peut-être définie comme la frontière de la couche limite correspondant à la surface sur laquelle les effets de cinétiques et les effets de viscosité sont du même ordre de grandeur. L'épaisseur de la couche s'entend dans les conditions normales d'utilisations.

Grâce à ces dispositions, le dispositif antivibratoire possède une rigidification plus progressive et peut travailler sur une plage fréquentielle plus importante, pour des hautes ou des basses fréquences.

Dans divers modes de réalisation du dispositif selon l'invention, on peut éventuellement avoir recours en outre à l'une et/ou à l'autre des dispositions suivantes :

- le passage présente en section la forme de fentes et/ou de trous, ayant une dimension caractéristique comprise entre 1 mm et 8 mm, selon la viscosité du fluide; on appelle « dimension caractéristique », la dimension pertinente par rapport aux effets de viscosité, cisaillement et/ou laminage, mentionnés ci-dessus ; à titre d'exemple, si l'ouverture est carrée, la dimension caractéristique correspond au côté du carré ; si l'ouverture est un cercle, la dimension caractéristique est son diamètre, si l'ouverture est une fente, la dimension caractéristique est sa largeur ; etc.
- les trous sont de formes différentes ;
- le dispositif comporte au moins deux passages traversant la cloison disposés sensiblement parallèlement et symétriquement à l'axe principal Z ;
- le dispositif comporte un corps en élastomère qui est relié d'une part à l'armature inférieure et d'autre part à l'armature supérieure ; ces armatures ne sont pas nécessairement d'une seule pièce ; ainsi, elles peuvent comprendre une coupelle et une bague par exemple ;
- la cloison est fixée à l'armature inférieure ;
- la cloison est rigide et annulaire et une membrane souple est disposée à l'intérieur de cette cloison, sensiblement perpendiculairement à l'axe principal Z, cette membrane étant déplaçable selon cet axe principal Z ;
- la membrane est flottante entre deux grilles reliées à la cloison ;
- la membrane est pincée dans la cloison ;
- l'une des chambres hydrauliques est divisée en deux chambres secondaires par une paroi de séparation comportant un orifice prévu pour faire communiquer les chambres secondaires;
- la paroi de séparation est formée d'une partie rigide et d'un collier en élastomère reliant la partie rigide à l'armature inférieure ;
- la raideur du collier est déterminée en fonction des vibrations auxquelles est soumis le dispositif ;
- le dispositif comporte un piston coulissant dans un cylindre traversant une paroi intermédiaire reliée à l'armature inférieure ; et

- le piston est relié à la paroi de séparation par un élément en élastomère ;
- le dispositif comporte un premier corps en élastomère relié à l'armature supérieure, un second corps en élastomère relié à l'armature inférieure, une armature intermédiaire intercalée entre le second et le premier corps en élastomère, une deuxième chambre B au moins en partie délimitée par l'armature inférieure et la cloison, et une troisième chambre C au moins en partie délimitée par la paroi souple et le premier corps en élastomère ;
- le premier corps en élastomère comporte une ouverture prévue pour faire communiquer la troisième chambre C avec l'extérieur ;
- le dispositif comporte une valve radiale dans la cloison prévue pour augmenter ou réduire un volume de travail et de compensation du fluide visqueux dans les chambres.

D'autres caractéristiques et avantages de l'invention apparaîtront au cours de la description suivante d'un de ses modes de réalisation donné à titre d'exemple non limitatif en regard des dessins joints, dans lesquels :

- la figure 1 représente une vue en coupe verticale d'un dispositif antivibratoire selon un premier mode de réalisation de l'invention ;
- la figure 2 représente une vue en coupe verticale d'un dispositif antivibratoire selon un deuxième mode de réalisation de l'invention ;
- la figure 3 représente une vue en coupe verticale d'un dispositif antivibratoire selon un troisième mode de réalisation de l'invention ;
- la figure 4 représente la forme de la raideur dynamique en fonction de la fréquence des vibrations appliquées à un dispositif de l'art antérieur (trait continu) et à un dispositif tel que représenté sur la figure 1 (traits pointillés);
- la figure 5 représente schématiquement le dispositif selon le premier mode de réalisation ;
- la figure 6 représente schématiquement le dispositif selon le troisième mode de réalisation ;
- les figures 7a, 7b, 7c représentent schématiquement différentes formes de fente correspondant à des sections de passage entre deux chambres d'un dispositif selon l'invention ; et
- les figures 8a, 8b, 8c et 8d représentent respectivement schématiquement différentes formes de trous correspondant à des sections de passage entre deux chambres d'un dispositif selon l'invention.

Dans la description qui va suivre, des références identiques désignent des pièces identiques ou ayant des fonctions similaires.

Des exemples de mode de réalisation de dispositifs selon l'invention sont décrits ci-dessous.

Ces exemples de dispositifs antivibratoires selon l'invention sont destinés à être insérés entre un élément de structure vibrant, tel qu'un moteur de véhicule, et un autre élément de structure, tel que la caisse d'un véhicule. Le but de ces dispositifs est de supporter le moteur de manière à le relier à la caisse et d'amortir les vibrations émanant du moteur et de la route. Les vibrations du moteur sont de faible amplitude et généralement de haute fréquence. Les vibrations de la route sont dues aux irrégularités et aux variations de déclivité du sol, lors de la circulation du véhicule sur ce sol. Ce sont des vibrations de plus grande amplitude et de basse fréquence.

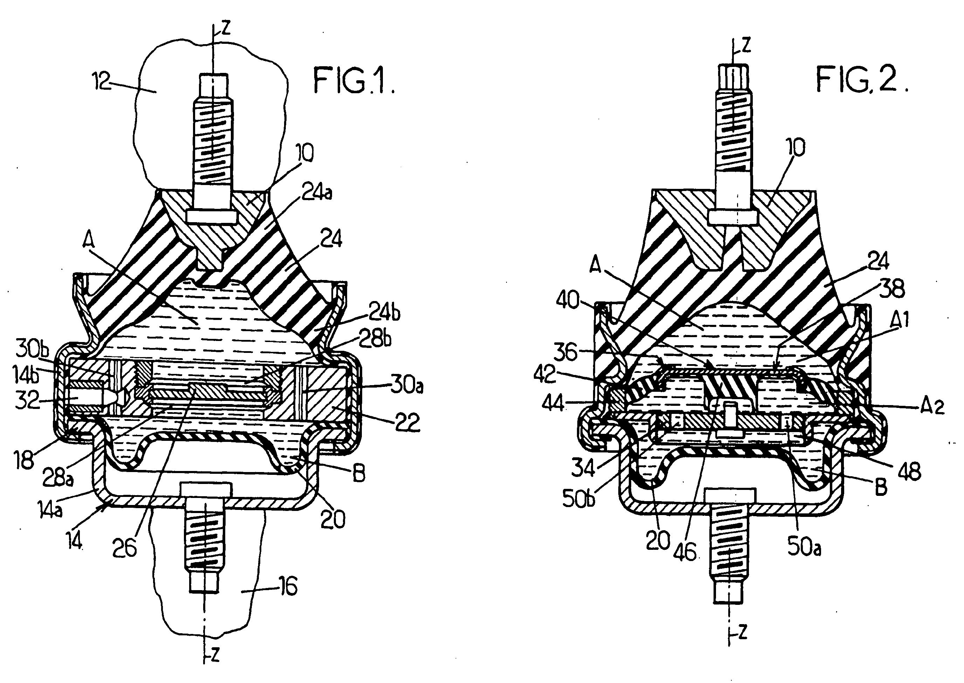

Selon un premier mode de réalisation représenté sur la figure 1, le dispositif selon l'invention comporte une armature supérieure 10 reliée à un premier élément de structure 12 et une armature inférieure 14 qui est reliée à un second élément de structure 16. Les deux armatures 10, 14 sont sollicitées selon un axe principal Z vertical par les vibrations du moteur et/ou de la caisse. L'armature inférieure 14 est d'axe principal Z, et constituée par deux parties 14a, 14b. La partie 14a a une forme de coupelle avec un rebord 18 s'étendant radialement vers l'extérieur. La partie 14b a une forme annulaire et forme une bague de sertissage enserrant le rebord 18, une paroi souple 20 et une cloison 22.

Ce dispositif antivibratoire comporte aussi un corps en élastomère 24 qui est de forme tronconique épaisse d'axe Z, dont le sommet 24a est relié à l'armature supérieure 10 et dont la base annulaire 24b est reliée à la partie 14b de l'armature inférieure 14. Ce corps en élastomère 24 joue le rôle d'un ressort principal et subit des déformations lors des sollicitations provenant de l'armature supérieure 10.

La cloison 22 est rigide et annulaire. En son centre est ménagé un espace à l'intérieur duquel se déplace une membrane 26, selon l'axe principal Z. La cloison 22 définit avec le corps en élastomère 24 une chambre de travail A et avec la paroi 26 souple, une chambre de compensation B.

Les chambres A et B sont remplies d'un fluide visqueux de viscosité cinématique comprise entre 20 et 100 000 centiStokes.

La paroi souple 20 est réalisée de manière à ce que la chambre de compensation B soit sous une pression sensiblement atmosphérique quelle que soit la pression régnant dans la chambre supérieure A.

La membrane 26 est positionnée dans un plan sensiblement perpendiculaire à l'axe principal Z, entre deux grilles 28a, 28b reliées à la cloison 22, et est mobile selon cet axe entre ces deux grilles. On utilise dans ce cas des grilles 28a, 28b adaptées pour limiter l'adhésion, sous l'effet de la viscosité du fluide, de la membrane 26 à ces grilles 28a, 28b. La membrane 26 permet de limiter la rigidification dynamique lors de vibrations de faible amplitude et de hautes fréquences.

Selon une autre variante de l'invention, la membrane 26 est pincée tout en gardant un degré de liberté selon l'axe principal Z.

La cloison 22 comporte deux passages (30a, 30b) constamment ouverts et diamétralement opposés. Ils traversent la cloison 22 selon une direction parallèle à l'axe principal Z. Leurs extrémités débouchent respectivement dans les chambres de travail A et de compensation B. Le fluide visqueux peut s'écouler à travers ces passages 30a, 30b, lorsque la chambre de travail A est mise sous pression. Les passages (30a, 30b) présentent chacun une section. Ces sections présentent des dimensions caractéristiques qui sont inférieures ou sensiblement égales à l'épaisseur de la couche limite du fluide.

Par exemple, si la section présente la forme d'un trou carré, la dimension caractéristique est le côté du carré. Si c'est un trou circulaire, la dimension caractéristique est son diamètre. Si la section présente la forme d'une fente, la dimension caractéristique est la largeur de la fente. Si la section est composée de plusieurs fentes, la longueur de celle-ci et leur disposition (radiale ou orthoradiale notamment) est prise en compte pour le réglage fréquentiel d'amortissement des vibrations. Ces dimensions caractéristiques sont de l'ordre de 1 mm.

La cloison 22 comporte en outre une valve 38 disposée radialement. Cette valve 38 fait communiquer l'extérieur du dispositif avec le conduit 30b. Elle est prévue pour le remplissage des chambres de travail A et de compensation B en fluide visqueux.

Un exemple de fonctionnement du premier mode de réalisation du dispositif selon l'invention est décrit ci-dessous.

Lorsque l'armature supérieure 10 subit des vibrations, le corps en élastomère 24 joue le rôle d'un ressort principal pour absorber ces vibrations.

Les vibrations de faible amplitude et de haute fréquence entraînent un déplacement et une déformation de la membrane 26.

Lors de vibrations de basse fréquence et de forte amplitude, les déplacements de la membrane 26 sont insuffisants. Alors, le fluide visqueux tend à passer de la chambre de travail A à la chambre de compensation B et vice versa à travers les deux passages 30a, 30b réalisés dans la cloison 22. L'absorption de ces vibrations est ainsi réalisée par laminage et/ou par cisaillement du fluide dans les conduits 30a, 30b.

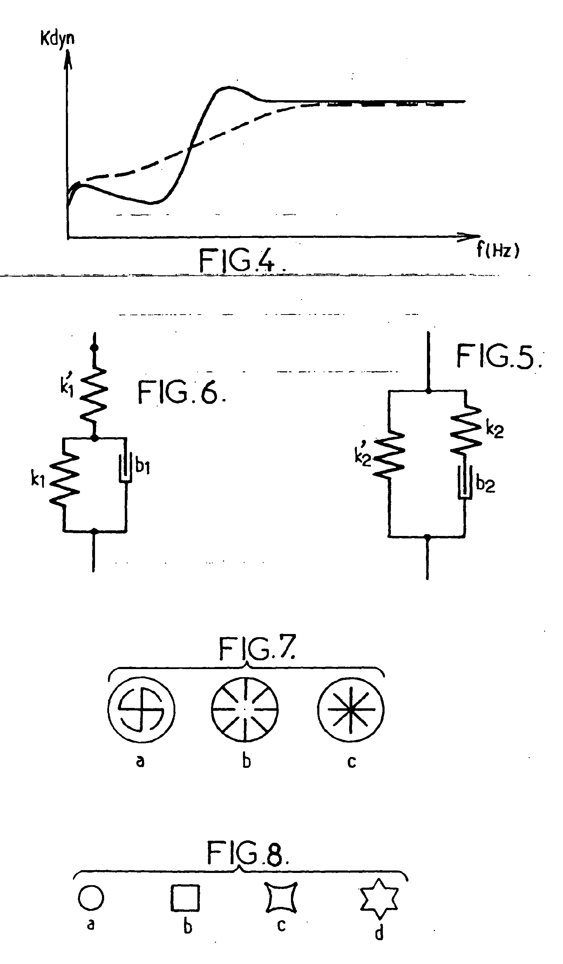

Comme représenté sur la figure 4, le mode de réalisation du dispositif selon l'invention décrit ci-dessus permet d'obtenir une rigidification plus progressive qu'un dispositif de l'art antérieur tel que ceux décrits dans le document FR-A-2 697 604. En effet, sur cette figure 4, est illustrée en trait continu la raideur d'un dispositif de l'art antérieur en fonction de la fréquence. En pointillé est représentée l'évolution de la raideur en fonction de la fréquence, pour un dispositif du type décrit ci-dessus en relation avec le premier mode de réalisation.

De plus, ce type de dispositif peut être utilisé sur une plage fréquentielle plus importante et notamment à basses fréquences. En effet, l'utilisation d'un dispositif selon l'invention n'est pas limitée à l'absorption des vibrations au voisinage de la fréquence de résonance d'un fluide dans une colonne, comme pour les dispositifs de l'art antérieur.

Ce dispositif est utilisable pour différents types de moteurs. Pour adapter les propriétés du dispositif au moteur, il suffit par exemple de choisir la viscosité du fluide en fonction du réglage fréquentiel souhaité pour l'amortissement des vibrations. Ce dispositif permet donc d'obtenir un dispositif antivibratoire dont le réglage fréquentiel est obtenu grâce aux différentes viscosités du fluide et non plus au moyen des modifications géométriques des ensembles rigides du dispositif. Ces différentes viscosités sont obtenues, par exemple, par ajout d'une poudre dans le fluide ou par mélange de fluides miscibles de viscosités différentes. A titre d'exemple, on utilise un fluide silicone. Le type de fluide peut avoir une viscosité dans une gamme très large de 20 à 100 000 centistockes, insensible à la température.

Le dispositif tel que décrit précédemment peut être schématisé selon la figure 5. Le dispositif obtenu comporte un ressort principal $k'_2$ réalisé par l'élément élastomère 24, en parallèle avec un ensemble constitué d'un ressort $k_2$, qui correspond à la raideur de gonflement de l'élastomère 24, et d'un élément visqueux avec un coefficient d'amortissement $b_2$ pour l'absorption des vibrations. En posant $p = j\omega$ (opérateur de dérivation), on obtient pour ce dispositif une fonction de transfert :

$$H_2(p) = \frac{k'_2\,k_2 + \left(k'_2\,b_2 + k_2 b_2\right)p}{k_2 + b_2 p} \approx \frac{A_2 + B_2 p}{C_2 + D_2 p}$$

$$\text{avec} \quad \begin{cases} A_2 = k'_2\,k_2 \\ B_2 = k'_2\,b_2 + k_2 b_2 \\ C_2 = k_2 \\ D_2 = b_2 \end{cases}$$

Ainsi, aux hautes fréquences :

$$p \to \infty \quad \text{et} \quad H_2(p) \to \frac{B_2 p}{D_2 p} \approx \frac{B_2}{D_2}$$

Ce dispositif a un gain constant et a donc un comportement de type capacitif.

Aux moyennes fréquences :

$$H_2(p) = \frac{k'_2\,k_2 + \left(k'_2\,b_2 + k_2 b_2\right)p}{k_2 + b_2 p} \approx \frac{A_2 + B_2 p}{C_2 + D_2 p}$$

Le dispositif donc, dans ce cas, a un comportement de type transfert du premier ordre.

Aux basses fréquences :

$$p \to 0 \quad \text{et} \quad H_2(p) \to \frac{A_2}{C_2}$$

A basses fréquences, le dispositif a donc également un comportement de type capacitif.

Ce résultat peut aussi être obtenu par un second mode de réalisation, représenté à la figure 2. Dans ce second mode de réalisation le dispositif comporte, comme pour le premier mode de réalisation, une armature supérieure 10, une armature inférieure 14 et un corps en élastomère 24. Les deux armatures 10, 14 sont sollicitées de la même manière que dans le premier mode de réalisation.

Le dispositif comporte aussi une paroi souple 20, qui forme avec une cloison 34 rigide, une chambre inférieure B. Le dispositif comporte également un corps en élastomère 24 qui délimite avec la cloison 34 une chambre supérieure A. Les chambres A et B sont remplies de fluide. La chambre supérieure A est divisée en deux chambres secondaires A1, A2 hydrauliques par l'intermédiaire d'une paroi de séparation 36, qui comporte un orifice 38 prévu pour faire communiquer lesdites chambres secondaires A1 et A2.

La paroi de séparation comporte une partie rigide 40 reliée par l'intermédiaire d'un collier 42 en élastomère à une bague 44 sertie avec l'armature inférieure 14, grâce à une armature intermédiaire 62.

La cloison 34 est reliée à la paroi de séparation 36 au moyen d'un élément en élastomère 46, qui transmet les mouvements de la paroi de séparation 36 vers la cloison rigide 34. La raideur de gonflement de l'élément en élastomère 46 peut être schématisé sur la figure 5 par le ressort $k_2$. Ainsi l'ensemble forme un piston qui coulisse dans un cylindre traversant une paroi intermédiaire 48 fixée à la bague 44 sertie sur l'armature inférieure 14. La cloison 34 comporte deux passages 50a, 50b diamétralement opposés à travers lesquels passe le fluide de la chambre A vers la chambre B. Ces passages sont du même type que ceux décrits dans le premier mode de réalisation, c'est à dire qu'ils traversent la cloison selon la direction principale Z, débouchent dans la chambre supérieure A et la chambre inférieure B et forment le passage du fluide prévu pour l'amortissement.

Lors de la mise en place du dispositif sur l'élément de structure, l'orifice 38 permet de faire passer le fluide d'une chambre secondaire à l'autre pour compenser les variations de volume dues à la charge de l'élément de structure qui déforme le corps en élastomère 24. Cette valve 38 ne joue pas de rôle d'amortisseur, son temps de réponse étant trop long en fonctionnement dynamique.

En fonctionnement dynamique, c'est-à-dire lorsque l'élément de structure est soumis à des vibrations, le collier 42, dont la raideur est définie en fonction des vibrations auxquelles est soumis le dispositif, et l'élément en élastomère 46 sollicitent le déplacement de la cloison 34. Ce déplacement entraîne le passage du fluide à travers les passages 50a, 50b de la cloison 34, ce qui amortit les vibrations de manière analogue au premier mode de réalisation.

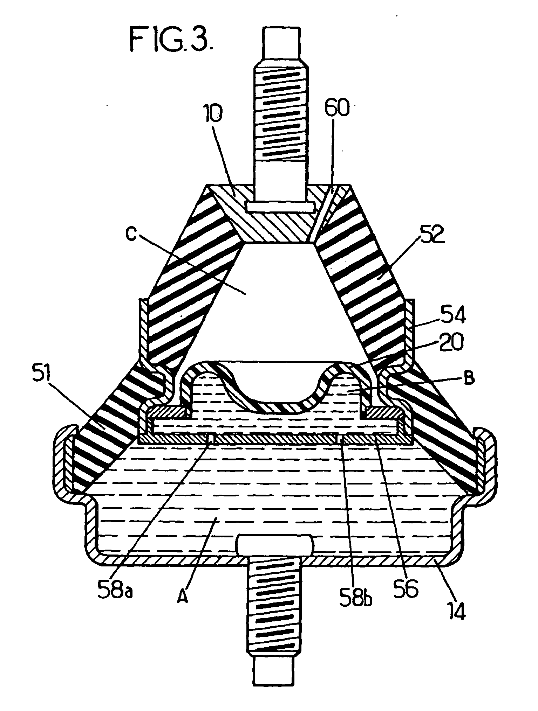

Dans un troisième mode de réalisation de l'invention, tel qu'illustré à la figure 3, le dispositif comporte une armature supérieure 10 et une armature inférieure 14. Un premier corps en élastomère 51 est relié à l'armature inférieure 14 et un second corps en élastomère 52, de forme conique, est relié à l'armature supérieure 10. Une armature intermédiaire 54 relie les deux corps en élastomère 51, 52. Une cloison 56 rigide est reliée à l'armature intermédiaire 54 et sépare une première chambre A, délimitée partiellement par l'armature inférieure 12, d'une deuxième chambre B, délimitée partiellement par une paroi souple 20. Les deux chambres A, B sont remplies de fluide. En fonctionnement, ce fluide passe d'une chambre à l'autre au moyen de deux passages 58a, 58b réalisés dans la cloison 56.

La paroi souple 20 est déformable. Elle sépare la deuxième chambre B d'une troisième chambre C délimitée partiellement par le second corps en élastomère 52. La troisième chambre C peut être en communication avec l'extérieur par une ouverture 60 créée dans l'armature supérieure 10. Elle ne comporte pas de fluide.

Lorsque l'armature supérieure 10 est soumise à des vibrations provenant de l'élément de structure sur lequel elle est disposée, elle transmet ces vibrations au second corps en élastomère 52, qui joue le rôle d'un ressort, et fait osciller la cloison rigide 56 par l'intermédiaire de l'armature intermédiaire 54. Le fluide est alors entraîné vers la seconde chambre B à travers les passages 58a, 58b et par conséquent amortit par laminage et/ou par cisaillement les vibrations, lors de son passage d'une chambre à l'autre. La paroi souple 20 se déforme en fonction du volume de fluide présent dans la deuxième chambre B.

Selon une variante de l'invention non représentée, la cloison rigide 56 comporte une membrane de découplage qui permet d'amortir, dans un premier temps, les vibrations de haute fréquence et de faible amplitude, émise par le moteur. Puis, lorsque l'amplitude des vibrations augmente, l'amortissement des vibrations est alors réalisé par laminage et/ou cisaillement grâce au fluide qui traverse les passages 58a, 58b créés dans la cloison 56.

Le troisième mode de réalisation du dispositif selon l'invention peut être schématisé comme sur la figure 6, dans laquelle le corps en élastomère 52 joue le rôle d'un ressort principal $k'_1$ en série avec un ensemble constitué d'un ressort $k_1$ réalisé par l'élément élastomère 51 et d'un élément visqueux avec un coefficient d'amortissement $b_1$, réalisé par les passages 58a et 58b.

En posant $p = j\omega$ (opérateur de dérivation), on obtient pour ce dispositif une fonction de transfert :

$$H_1(p) = \frac{k'_1 k_1 + k'_1 b_1 p}{k'_1 + k_1 + b_1 p} \approx \frac{A_1 + B_1 p}{C_1 + D_1 p}$$

$$\text{avec} \begin{cases} A_1 = k'_1 k_1 \\ B_1 = k'_1 b_1 \\ C_1 = k'_1 + k_1 \\ D_1 = b_1 \end{cases}$$

Ainsi, aux hautes fréquences :

$$p \to \infty, \quad H_1(p) \to \frac{B_1 p}{D_1 p} \approx \frac{B_1}{D_1}$$

Ce dispositif a un gain constant et a donc un comportement de type capacitif.

Aux moyennes fréquences :

$$H_1(p) = \frac{k'_1 k_1 + k'_1 b_1 p}{k'_1 + k_1 + b_1 p} \approx \frac{A_1 + B_1 p}{C_1 + D_1 p}$$

Le dispositif donc, dans ce cas, a un comportement de type transfert du premier ordre.

Aux basses fréquences :

$$p \to 0 , \quad H_1(p) \to \frac{A_1}{C_1}$$

A basses fréquences, le dispositif a donc également un comportement de type capacitif.

Ce dispositif en série possède donc un comportement fréquentiel sensiblement similaire à celui du dispositif en parallèle. On obtient ainsi une rigidification dynamique progressive et retardée, ainsi qu'une utilisation sur une plage fréquentielle plus importante.

L'invention n'est nullement limitée aux modes de réalisation décrits et illustrés qui n'ont été donnés qu'à titre d'exemples.

Ainsi, selon des variantes des dispositifs décrits ci-dessus, on peut ne pas avoir de système de découplage du type de la membrane 26.

Dans tous les cas, de nombreuses formes peuvent être envisagées pour les trous ou les fentes des passages 30, 50, 58, quelque soit le mode de réalisation. Leurs dimensions caractéristiques sont comprises entre 1 et 8 mm, cette dimension étant choisie en fonction de la viscosité du fluide présent dans les chambres, et du type d'amortissement souhaité.

La figure 7 montre ainsi des formes de fente en trèfle (figure 7a), en rayons extérieurs (figure 7b) ou en rayons intérieurs (figure 7c).

Il est aussi possible d'utiliser des trous de différentes formes, comme illustré par la figure 8. La figure 8a représente un trou de forme circulaire, la figure 8b un trou carré, la figure 8c en losange pincé et la figure 8d en étoile.

Les trous peuvent être positionnés selon des motifs variés dans la cloison 22, 34, 56. Ainsi, ils peuvent être plutôt périphériques et/ou centraux et/ou à différentes distances les uns des autres.

En fait, une grande liberté de forme est possible notamment si la cloison 22, 34, 56 est réalisée par des procédés classiques d'usinage ou d'électroérosion, par assemblage de tôles peu épaisses, par extrusion, ou par moulage de matière plastique.

**Revendications**

1. Dispositif antivibratoire comportant :

    - une armature supérieure (10) adaptée pour être solidarisée à un premier élément de structure (12), et une armature inférieure (14) adaptée pour être solidarisée à un second élément de structure (16), les deux armatures étant sollicitées selon un axe principal (Z),
    - au moins deux chambres hydrauliques (A, B) remplies d'un fluide, séparées par une cloison (22, 34, 56), dont l'une est délimitée au moins en partie par une paroi souple déformable (20) et par la cloison (22, 34, 56), l'autre chambre hydraulique (A) étant délimitée au moins en partie par un corps en élastomère (24, 50) et la cloison (22, 34, 56),
    - un passage (30, 50, 58) constamment ouvert disposé dans la cloison (22, 34, 56), mettant en communication les chambres hydrauliques (A) et (B) et à travers lequel peut s'écouler le fluide,

    **caractérisé en ce que** le fluide a une viscosité comprise entre 20 et 1.00000 centiStokes à la température ambiante et **en ce que** le passage (30, 50, 58) présente en section au moins une dimension, dite dimension caractéristique, qui est inférieure ou sensiblement égale à l'épaisseur d'une couche limite caractéristique du fluide.

2. Dispositif antivibratoire selon la revendication précédente, dans lequel le passage présente en section la forme de fentes et/ou de trous, ayant une dimension caractéristique comprise entre 1 mm et 8 mm.

3. Dispositif selon l'une des revendications précédentes, dans lequel les trous sont de formes différentes.

4. Dispositif selon l'une des revendications précédentes, comportant au moins deux passages (30, 50, 58) traversant la cloison (22, 34, 56) et disposés sensiblement parallèlement et symétriquement à l'axe principal (Z).

5. Dispositif antivibratoire selon l'une des revendications précédentes, dans lequel le corps en élastomère (24) est relié d'une part à l'armature inférieure (14) et d'autre part à l'armature supérieure (10).

6. Dispositif antivibratoire selon l'une des revendications précédentes, dans lequel la cloison (22, 34) est fixée à l'armature inférieure (14).

7. Dispositif selon l'une des revendications précédentes, dans lequel la cloison (22) est rigide et annulaire et une membrane (26) souple est disposée à l'intérieur de cette cloison (22), sensiblement perpendiculairement à l'axe principal (Z), cette membrane (26) étant déplaçable selon cet axe principal (Z).

8. Dispositif selon la revendication 7, dans lequel la membrane (26) est flottante entre deux grilles reliées à la cloison (22).

9. Dispositif selon la revendication 7, dans lequel la membrane est pincée dans la cloison (22).

10. Dispositif antivibratoire selon les revendications 1 à 5, dans lequel l'une des chambres hydrauliques (A, B) est divisée en deux chambres secondaires (A1, A2) par une paroi de séparation (36) comportant un orifice (38) prévu pour faire communiquer les chambres secondaires (A1, A2).

11. Dispositif antivibratoire selon la revendication 10, dans lequel la paroi de séparation (36) est formée d'une partie rigide (40) et d'un collier (42) en élastomère reliant la partie rigide (40) à l'armature inférieure (14).

12. Dispositif antivibratoire selon la revendication 11, dans lequel la raideur du collier (42) est déterminée en fonction des vibrations auxquelles est soumis le dispositif.

13. Dispositif selon l'une des revendications 10 à 12, comprenant un piston coulissant dans un cylindre traversant une paroi intermédiaire (48) reliée à l'armature inférieure (14) et dans lequel le piston est relié à la paroi de séparation (36) par un élément en élastomère (46).

14. Dispositif antivibratoire selon l'une des revendications 1 à 4, comportant :

   - un premier corps en élastomère (52) relié à l'armature supérieure,
   - un second corps en élastomère (51) relié à l'armature inférieure (14),
   - une armature intermédiaire (54) intercalée entre le second (51) et le premier (52) corps en élastomère,
   - une deuxième chambre (B) délimitée au moins en partie par l'armature inférieure (14) et la cloison (56), et
   - une troisième chambre (C) délimitée au moins en partie par la paroi souple (20) et le premier corps en élastomère (52).

15. Dispositif antivibratoire selon la revendication 14, dans lequel le premier corps en élastomère (52) comporte une ouverture prévue pour faire communiquer la troisième chambre (C) avec l'extérieur.

16. Dispositif selon l'une des revendications précédentes, comportant une valve (32) radiale dans la cloison (22, 34, 56) prévue pour augmenter ou réduire un volume de travail et de compensation du fluide visqueux dans les chambres (A) et (B).

**Claims**

1. Anti-vibration device including:

   - an upper strength member (10) suitable to be rigidly attached to a first structural element (12), and a lower strength member (14) suitable to be rigidly attached to a second structural element (16), the two fastenings being coerced along a main axis (Z),
   - at least two hydraulic chambers (A, B) filled with a fluid, separated by a partition (22, 34, 56), one of which is at least partially defined by a deformable flexible wall (20) and by the partition (22, 34, 56), the other hydraulic chamber (A) being at least partially defined by an elastomeric body (24, 50) and the partition (22, 34, 56),
- a permanently open passage (30, 50, 58) arranged in the partition (22, 34, 56) placing the hydraulic chambers (A) and (B) in communication and through which the fluid can flow,

**characterized by** the fact that the fluid has a viscosity of between 20 and 100000 centiStokes at ambient temperature and by the fact that the passage (30, 50, 58) has in section at least one dimension, called the characteristic dimension, which is smaller than or substantially equal to the thickness of a characteristic boundary layer of the fluid.

2. Anti-vibration device as described in the preceding claim, in which the passage has in section the form of slots and/or holes, having a characteristic dimension of between 1 mm and 8 mm.

3. Device as described in one of the preceding claims, in which the holes are of different shapes.

4. Device as described in one of the preceding claims, including at least two passages (30, 50, 58) passing through the partition (22, 34, 56) and arranged substantially parallel with and symmetrical about the main axis (Z).

5. Anti vibration device as described in one of the preceding claims, in which the elastomeric body (24) is joined on the one hand to the lower strength member (14) and on the other to the upper strength member (10).

6. Anti-vibration device as described in one of the preceding claims, in which the partition (22, 34) is fixed to the lower strength member (14).

7. Device as described in one of the preceding claims, in which the partition (22) is rigid and annular and a flexible diaphragm (26) is arranged inside this partition (22), substantially perpendicularly to the main axis (Z), this diaphragm (26) being displaceable in the direction of this main axis (Z).

8. Device as described in claim 7, in which the diaphragm (26) floats between two grids joined to the partition (22).

9. Device as described in claim 7, in which the diaphragm is nipped in the partition (22).

10. Anti-vibration device as described in claims 1 to 5, in which one of the hydraulic chambers (A, B) is divided into two secondary chambers (A1, A2) by a separating wall (36) including an orifice (38) provided to cause the secondary chambers (A1, A2) to communicate.

11. Anti-vibration device as described in claim 10, in which the separation wall (36) is formed of a rigid part (40) and an elastomeric collar (42) joining the rigid part (40) to the lower strength member (14).

12. Anti-vibration device as described in claim 11, in which the stiffness of the collar (42) is determined as a function of the vibrations to which the device is subjected.

13. Device as described in one of claims 10 to 12, comprising a piston sliding in a cylinder passing through an intermediate wall (48) joined to the lower strength member (14) and in which the piston is joined to the separating wall (36) by an elastomeric element (46).

14. Anti-vibration device as described in one of claims 1 to 4, including:

    - a first elastomeric body 52 joined to the upper strength member,
    - a second elastomeric body (51) joined to the lower strength member (14),
    - an intermediate strength member (54) inserted between the second (51) and the first (52) elastomeric body,
    - a second chamber (B) at least partially defined by the lower strength member (14) and the partition (56), and
    - a third chamber C at least partially defined by the flexible wall (20) and the first elastomeric body (52).

15. Anti-vibration device as described in claim 14, in which the first elastomeric body (52) includes an opening provided to cause the third chamber C to communicate with the outside.

16. Device as described in one of the preceding claims, including a radial valve (32) in the partition (22, 34, 56) provided to increase or reduce a working and a compensation volume of the viscous fluid in the chambers (A) and (B).

**Patentansprüche**

1. Schwingungsdämpfungseinrichtung, umfassend:

   - ein oberes Anschlußteil (10), das angepasst ist, um mit einem ersten Strukturelement (12) fest verbunden zu werden, und ein unteres Anschlußteil (14), das angepasst ist, um mit einem zweiten Strukturelement (16) fest verbunden zu werden, wobei die beiden Anschlußteile (10, 14) in einer Hauptachse (Z) beaufschlagt werden,
   - mindestens zwei mit einem Fluid gefüllte Hydraulikkammern (A, B), die durch eine Trennwand (22, 34, 56) getrennt sind und von denen eine mindestens teilweise durch eine verformbare biegsame Wand (20) und durch die Trennwand (22, 34, 56) begrenzt ist, wobei die andere Hydraulikkammer (A) mindestens teilweise durch einen Körper aus Elastomer (24, 50) und die Trennwand (22, 34, 56) begrenzt ist,
   - einen in der Trennwand (22, 34, 56) angeordneten, ständig offenen Durchgang (30, 50, 58), der die Hydraulikkammern (A) und (B) in Verbindung setzt und durch den das Fluid fließen kann,

   **dadurch gekennzeichnet, dass** das Fluid eine Viskosität zwischen 20 und 100000 Centistoke bei Raumtemperatur besitzt und dass der Durchgang (30, 50, 58) im Querschnitt mindestens eine Abmessung, charakteristische Abmessung genannt, aufweist, die kleiner als oder im Wesentlichen gleich der Dicke einer charakteristischen Grenzschicht des Fluids ist.

2. Schwingungsdämpfungseinrichtung nach dem vorhergehenden Anspruch, bei der der Durchgang im Querschnitt die Form von Schlitzen und/oder Löchern aufweist, die eine charakteristische Abmessung zwischen 1 mm und 8 mm besitzen.

3. Einrichtung nach einem der vorhergehenden Ansprüche, bei der die Löcher von verschiedenen Formen sind.

4. Einrichtung nach einem der vorhergehenden Ansprüche, umfassend mindestens zwei Durchgänge (30, 50, 58), die die Trennwand (22, 34, 56) durchqueren und im Wesentlichen parallel und symmetrisch zur Hauptachse (Z) angeordnet sind.

5. Schwingungsdämpfungseinrichtung nach einem der vorhergehenden Ansprüche, bei der der Körper aus Elastomer (24) einerseits mit dem unteren Anschlußteil (14) und andererseits mit dem oberen Anschlußteil (10) verbunden ist.

6. Schwingungsdämpfungseinrichtung nach einem der vorhergehenden Ansprüche, bei der die Trennwand (22, 34) an dem unteren Anschlußteil (14) befestigt ist.

7. Einrichtung nach einem der vorhergehenden Ansprüche, bei der die Trennwand (22) starr und ringförmig ist und eine biegsame Membran (26) im Inneren dieser Trennwand (22) im Wesentlichen senkrecht zur Hauptachse (Z) angeordnet ist, wobei diese Membran (26) in dieser Hauptachse (Z) beweglich ist.

8. Einrichtung nach Anspruch 7, bei der die Membran (26) zwischen zwei mit der Trennwand (22) verbundenen Gittern schwimmend angeordnet ist.

9. Einrichtung nach Anspruch 7, bei der die Membran in der Trennwand (22) festgeklemmt ist.

10. Schwingungsdämpfungseinrichtung nach den Ansprüche 1 bis 5, bei der eine der Hydraulikkammern (A, B) in zwei sekundäre Kammern (A1, A2) durch eine Trennwand (36) geteilt ist, die eine Öffnung (38) aufweist, die vorgesehen ist, um die sekundären Kammern (A1, A2) in Verbindung zu setzen.

11. Schwingungsdämpfungseinrichtung nach Anspruch 10, bei der die Trennwand (36) aus einem starren Teil (40) und einem Ring (42) aus Elastomer gebildet ist, der den starren Teil (40) mit dem unteren Anschlußteil (14) verbindet.

12. Schwingungsdämpfungseinrichtung nach Anspruch 11, bei der die Steifheit des Rings (42) in Abhängigkeit von den Schwingungen, denen die Einrichtung ausgesetzt ist, bestimmt ist.

13. Einrichtung nach einem der Ansprüche 10 bis 12, die einen Kolben umfasst, der in einem Zylinder gleitet, der eine mit dem unteren Anschlußteil (14) verbundene Zwischenwand (48) durchquert, und bei der der Kolben mit der Trennwand (36) durch ein Element aus Elastomer (46) verbunden ist.

**14.** Schwingungsdämpfungseinrichtung nach einem der Ansprüche 1 bis 4, umfassend:

- einen ersten Körper aus Elastomer (52), der mit dem oberen Anschlußteil verbunden ist,
- einen zweiten Körper aus Elastomer (51), der mit dem unteren Anschlußteil (14) verbunden ist,
- eine Zwischenbewehrung (54), die zwischen den zweiten (51) und den ersten (52) Körper aus Elastomer eingesetzt ist,
- eine zweite Kammer (B), die mindestens teilweise durch das untere Anschlußteil (14) und die Trennwand (56) begrenzt ist, und
- eine dritte Kammer (C), die mindestens teilweise durch die biegsame Wand (20) und den ersten Körper aus Elastomer (52) begrenzt ist.

**15.** Schwingungsdämpfungseinrichtung nach Anspruch 14, bei der der erste Körper aus Elastomer (52) eine Öffnung umfasst, die dafür vorgesehen ist, die dritte Kammer (C) mit dem Äußeren in Verbindung zu setzen.

**16.** Einrichtung nach einem der vorhergehenden Ansprüche, umfassend ein radiales Ventil (32) in der Trennwand (22, 34, 56), das dafür vorgesehen ist, ein Arbeits- und Ausgleichsvolumen des viskosen Fluids in den Kammern (A) und (B) zu vergrößern oder zu verkleinern.

FIG.2.

FIG.1.

FIG.3.

FIG.4.

FIG.6.

FIG.5.

FIG.7.

a    b    c

FIG.8.

a    b    c    d

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2697604 A